# EUROPÄISCHE PATENTSCHRIFT

(11) **EP 1 173 351 B1**
(45) Veröffentlichungstag und Bekanntmachung des Hinweises auf die Patenterteilung: **19.11.2003**
(21) Anmeldenummer: 00918800.4
(22) Anmeldetag: 15.03.2000
(51) Int. Cl.: B60R 21/02, B60N 3/06

(54) **SICHERHEITSEINRICHTUNG FÜR EIN KRAFTFAHRZEUG**
SAFETY DEVICE FOR A MOTOR VEHICLE
DISPOSITIF DE SECURITE POUR AUTOMOBILE

(30) Priorität: 03.04.1999 DE 19915240
(43) Veröffentlichungstag der Anmeldung: 23.01.2002
(73) Patentinhaber: Volkswagen Aktiengesellschaft, 38436 Wolfsburg (DE)
(72) Erfinder: FECHNER, Holger, D-38440 Wolfsburg (DE); SINNHUBER, Ruprecht, D-38518 Gifhorn (DE); LEUE, Enrico, D-39646 Oebisfelde (DE)
(86) Internationale Anmeldenummer: EP0002286
(87) Internationale Veröffentlichungsnummer: WO00059756

(56) Entgegenhaltungen:
- DE-A- 19 727 598
- DE-C- 4 445 485
- PATENT ABSTRACTS OF JAPAN vol. 1999, no. 02, 26. Februar 1999 (1999-02-26) & JP 10 310011 A (HONDA MOTOR CO LTD), 24. November 1998 (1998-11-24)
- PATENT ABSTRACTS OF JAPAN vol. 1999, no. 02, 26. Februar 1999 (1999-02-26) & JP 10 305746 A (HONDA MOTOR CO LTD), 17. November 1998 (1998-11-17)
- PATENT ABSTRACTS OF JAPAN vol. 1999, no. 13, 30. November 1999 (1999-11-30) & JP 11 208348 A (HONDA MOTOR CO LTD), 3. August 1999 (1999-08-03)

## Beschreibung

Die Erfindung betrifft eine Sicherheitseinrichtung für ein Kraftfahrzeug, umfassend eine in einem vorderen Fußraum des Kraftfahrzeugs angebrachte Fußablage, die im Bereich ihres oberen Randes gelenkig mit einer vorderen Begrenzungswand des Fußraums verbunden ist, um einen im Normalbetrieb vorhandenen Fußablagewinkel zwischen einer dem Fahrgastraum des Kraftfahrzeugs zugewandten schrägen Auflagefläche der Fußablage und einer zur Fahrbahnebene parallelen Ebene bei einer unfallbedingten Intrusion der Begrenzungswand in den Fußraum zu bewahren oder zu verkleinern.

In den zurückliegenden Jahren konnte bei Frontalunfällen von Personenkraftwagen eine Veränderung des Verletzungsmusters beobachtet werden. Bedingt durch einen stark zunehmenden Anteil von Personenkraftwagen mit Fahrer- und zuletzt auch Beifahrer-Airbag ist bei diesen Unfällen der prozentuale Anteil von Kopf- und Oberkörperverletzungen stark zurückgegangen, während gleichzeitig der prozentuale Anteil von Verletzungen der unteren Extremitäten zugenommen hat.

Diese Verletzungen sind häufig die Folge einer Intrusion der Spritzwand oder der Radhauswand in den Fahrgastraum, die zum Beispiel durch eine Rückwärtsverlagerung des Motors oder des Getriebes bei einem Frontalaufprall mit hoher Geschwindigkeit oder durch Eindringen eines Hindernisses im Bereich des Radhauses bei einem versetzten Aufprall (Offset-Crash) verursacht werden kann. Dabei wurde festgestellt, daß die Intrusion der Spritzwand oder Radhauswand in Höhe des Bodens aufgrund der hohen Steifigkeit der Bodenwanne zumeist verhältnismäßig gering ausfällt, während oberhalb des Bodens zwischen diesem und der Unterseite der Instrumententafel häufig ein verstärktes Eindrücken der Spritzwand oder Radhauswand in den Fußraum zu beobachten ist.

Bei einer von einem Teil der Spritzwand bzw. Radhauswand gebildeten oder fest mit dieser verbundenen Fußablage hat diese vom Boden aus nach oben zunehmende Intrusion zur Folge, daß der gewöhnlich als Fußablagewinkel bezeichnete spitze Winkel zwischen der schrägen Auflagefläche der Fußablage und einer zur Fahrbahnebene parallelen Ebene zunimmt. Das heißt, der Fußablagewinkel, der normalerweise zwischen 55 und 60 Grad beträgt, wird steiler, wobei er nicht selten Wert von nahe 90 Grad oder darüber erreicht. Diese Zunahme der Steigung der schrägen Auflagefläche der Fußablage führt bei einem auf der Fußablage ruhenden Fuß eines Fahrzeuginsassen zu einer Dorsiflexion, das heißt zu einer Beugung des Fußes in Richtung des Fußrückens, mit anderen Worten zu einer Annäherung der Zehen an das Schienbein. Diese Dorsiflexion bewirkt eine Überdehnung von Sehnen- und Muskelgewebe des Fußes und kann schmerzhafte und langsam heilende Gewebeabrisse verursachen.

Um diese und andere Verletzungen bei einer unfallbedingten Intrusion der Spritzwand oder der Radhauswand zu vermeiden, wurde in der noch unveröffentlichten Deutschen Patentanmeldung des Anmelders eine Sicherheitseinrichtung der eingangs genannten Art vorgeschlagen. Bei dieser Sicherheitseinrichtung wird die Fußablage vom hochgezogenen vorderen Ende einer auf dem Boden des Fahrgastraums aufliegenden Wanne gebildet, die durch eine von der intrudierenden Spritzwand darauf ausgeübte Kraft entgegen der Fahrtrichtung verschoben wird, um die in den Fußraum ragenden unteren Extremitäten eines Fahrzeuginsassen aus einem Bereich einer unfallbedingten Verformung der Spritzwand heraus nach hinten zu bewegen. Bei einigen Ausführungsformen ist der obere Rand des hochgezogenen vorderen Endes der Wanne kardanisch an der Spritzwand angelenkt. Dadurch wird zum einen während des Normalbetriebs eine ungewollte Verschiebung der Fußablage nach hinten verhindert. In Verbindung mit einer entsprechend ausgebildeten Führung für die Wanne sorgt die Gelenkverbindung zwischen deren vorderem Rand und der Spritzwand außerdem dafür, daß sich der Fußablagewinkel bei der Intrusion der Spritzwand nicht vergrößert.

Jedoch wird bei der bekannten Sicherheitseinrichtung als nachteilig angesehen, daß sich die Fußablage weit nach hinten in den Fußraum erstreckt und damit ein verhältnismäßig großes Gewicht aufweist, und daß dort am Boden des Fahrgastraums Führungen für die Fußablage vorgesehen werden müssen, wodurch ein nicht unerheblicher Aufwand für den Einbau der Sicherheitseinrichtung erforderlich ist.

Ausgehend hiervon liegt der Erfindung die Aufgabe zugrunde, eine Sicherheitseinrichtung der eingangs genannten Art zu schaffen, mit der bei verhältnismäßig geringem zusätzlichem Gewicht und Aufwand die Gefahr von Verletzungen von Fahrzeuginsassen durch eine Dorsiflexion ihrer unteren Extremitäten vermieden werden kann.

Diese Aufgabe wird erfindungsgemäß durch eine auf die Fußablage einwirkende steife Stütze gelöst, die ein starr mit der Begrenzungswand verbundenes unteres Ende und ein unterhalb der Gelenkverbindung auf die Fußablage einwirkendes oberes Ende aufweist.

Der Erfindung liegt der Gedanke zugrunde, die verstärkte Einbauchung der Begrenzungswand oberhalb des Bodens des Fahrgastraums bzw. eine dadurch verursachte Neigungsänderung der Begrenzungswand unmittelbar oberhalb des Bodens auszunutzen, um die Fußablage in Bezug zur Spritzwand so zu verschwenken, daß der Fußablagewinkel bewahrt oder ggf. sogar etwas verkleinert wird. Dies wird durch die erfindungsgemäße Merkmalskombination erreicht, da die mit ihrem unteren Ende starr an der Begrenzungswand befestigte steife Stütze bei einer Neigungsänderung der Begrenzungswand im Bereich der Befestigung ebenfalls ihre Neigung ändert, so daß ihr oberes, auf die Fußablage einwirkendes Ende entgegen der Fahrtrichtung verlagert und dadurch die Fußablage von der intrudierenden Begrenzungswand weg verschwenkt wird. Durch eine geeignete Wahl der Stellen, an denen die Stütze an der Begrenzungswand befestigt ist bzw. auf die Fußablage einwirkt, bleibt so der Fußablagewinkel während der Intrusion der Begrenzungswand im wesentlichen unverändert und kann ggf. sogar etwas verkleinert werden.

Gemäß einer weiteren bevorzugten Ausgestaltung der Erfindung wird das untere Ende der Stütze in der Nähe eines Bodens des Fahrgastraums so an der Begrenzungswand festgeschweißt, daß die Stütze steil oder senkrecht nach oben weist, wobei sich ihr oberes Ende etwas unterhalb vom oberen Rand der Fußablage bzw. der in dessen Nähe angeordneten Gelenkverbindung befindet und ein Auflager für die Fußstütze bildet, so daß diese von der Gelenkverbindung aus schräg nach unten in den Fußraum ragt. Die Fußablage wird dabei vorzugsweise von einer biegesteifen Platte gebildet, deren dem Fahrgastraum zugewandte schräge Auflagefläche mit einer zur Fahrbahnebene parallelen Ebene einen Fußablagewinkel zwischen 50 und 60 Grad einschließt, während ihre der Begrenzungswand zugewandte Rückseite auf dem oberen Ende der Stütze aufliegt.

Grundsätzlich wäre es zwar möglich, das obere Ende der Stütze gelenkig an der Fußablage zu befestigen. Der damit verbundene Aufwand kann jedoch durch ein verschiebbar an der Rückseite der Fußablage anliegendes oberes Ende der Stütze vermieden werden, wobei das letztere gerundet und/oder in einer Gleitführung auf der Rückseite der Fußablage verschiebbar gelagert werden kann, um bei einer Intrusion der Begrenzungswand eine reibungslose Verschiebung des oberen Endes der Stütze entlang der Fußablage zu ermöglichen.

Im folgenden wird die Erfindung anhand eines in der Zeichnung dargestellten Ausführungsbeispiels näher erläutert. Es zeigen
Fig. 1: eine schematische Seitenansicht eines Teils einer Fahrgastzelle eines Pkw mit einer erfindungsgemäßen Sicherheitseinrichtung bei einem Aufprallversuch;
Fig. 2: eine schematische Seitenansicht eines Teils einer Fahrgastzelle eines Pkw ohne eine erfindungsgemäße Sicherheitseinrichtung bei einem entsprechenden Aufprallversuch;
Fig. 3: eine vergrößerte schematische Seitenansicht der erfindungsgemäßen Sicherheitseinrichtung aus Fig. 1 vor, während und nach dem Aufprallversuch;
Fig. 4: eine schaubildliche Darstellung eines Tibia-Index gemessen über die Zeit des Aufpralls.

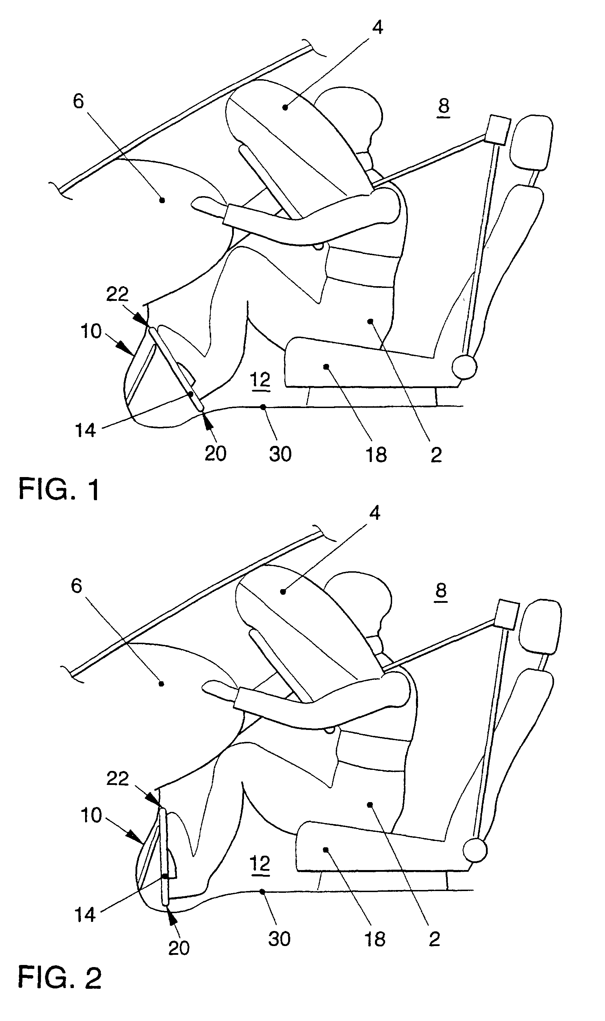

Die Figuren 1 und 2 zeigen eine Fahrgastzelle (nur teilweise dargestellt) eines Pkw mit einer Versuchspuppe 2 während eines Aufprallversuchs, und zwar jeweils 70 ms nach einem Aufprall, bei dem ein Lenkrad-Airbag 4 auslöst und eine unterhalb einer Instrumententafel 6 zwischen einem Fahrgastraum 8 und einem Motorraum des Pkw angeordnete Spritzwand 10 in den Fußraum 12 der Versuchspuppe 2 intrudiert, so daß eine im Fußraum 12 angeordnete Fußablage 14 für die Füße der Versuchspuppe 2 entgegen der Fahrtrichtung nach hinten verlagert wird.

Die in Fig. 2 dargestellte Fahrgastzelle weist eine herkömmliche Fußablage 14 auf, die im Bereich ihres oberen und ihres unteren Randes 22, 20 starr an der Spritzwand 10 befestigt ist. Da bei der Intrusion der Spritzwand 10 der untere Rand 20 der Fußablage 14 infolge der großen Steifigkeit einer Bodenwanne der Fahrgastzelle nur wenig entgegen der Fahrtrichtung verlagert wird, während sich im Vergleich dazu ihr oberer Rand 22 durch eine stärkere Einbuchtung der Spritzwand 10 weiter oberhalb eines Fußraumbodens 30 stärker nach hinten bewegt, wird die Neigung der Fußablage 14 steiler, so daß diese nach dem Aufprall eine annähernd vertikale Ausrichtung aufweist. Dies führt zu einer starken Dorsiflexion der Füße der Versuchspuppe 2, d.h. einer Biegung des Füße nach oben in Richtung des Fußrückens bzw. auf das Schienbein zu. Durch diese Dorsiflexion werden die Sprunggelenke und insbesondere deren Bandapparat stark belastet, wodurch nicht selten schwer heilende Bänderrisse verursacht werden.

Bei der in Fig. 1 dargestellten Fahrgastzelle wird hingegen die Fußablage 14 im wesentlichen parallel zu ihrer ursprünglichen Ausrichtung nach hinten in den Fußraum 12 der Versuchspuppe 2 verlagert. Wie man sieht, kommt es damit nicht zu einer Dorsiflexion der Füße der Versuchspuppe 2 und den zuvor beschriebenen Auswirkungen. Weil das obere Ende der Fußablage 14 in beiden Fällen etwa an der gleichen Stelle positioniert ist, wird die Fußablage 14 insgesamt allerdings etwas weiter nach hinten in Richtung des benachbarten Vordersitzes 18 bewegt, was an der etwas steileren Neigung der Unterschenkel der Versuchspuppe 2 in Fig. 1 erkennbar ist. Diese ist jedoch insofern ebenfalls von Vorteil, als die Füße und Unterschenkel der Versuchspuppe 2 etwas weiter aus dem Bereich einer unfallbedingten Verformung der Spritzwand 10 und der Pedalerie heraus nach hinten verlagert werden und damit auch weniger verletzungsgefährdet sind.

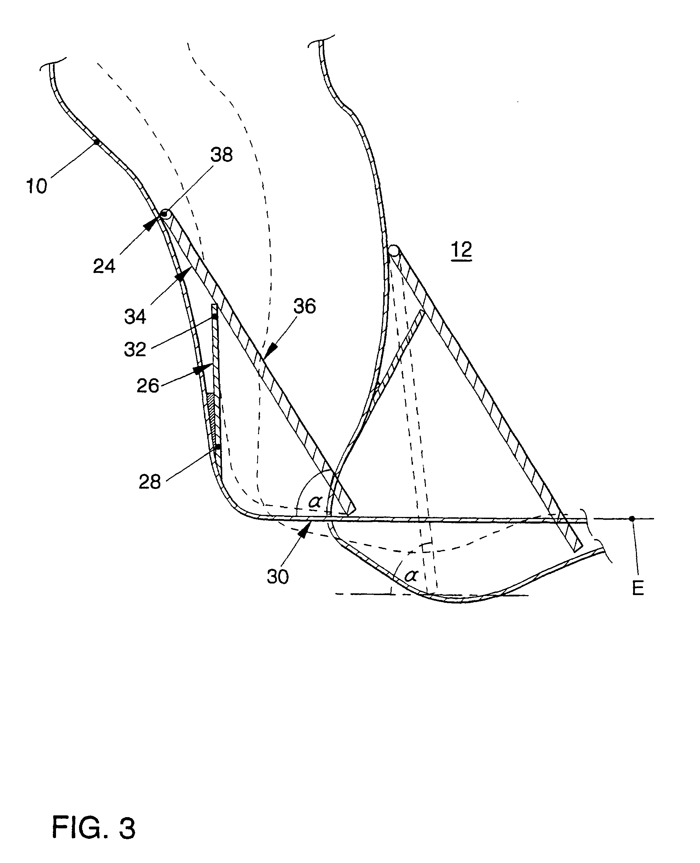

Um diese Wirkungen zu erzielen, ist die in den Figuren 1 und 3 dargestellte Fußablage 14 an ihrem oberen Rand 22 durch eine Gelenkverbindung 24 an der Spritzwand 10 befestigt, wie am besten in Fig. 3 dargestellt, und stützt sich unterhalb dieser Gelenkverbindung 24 auf einer starren Stütze 26 ab, deren unteres Ende 28 nahe dem Boden 30 des Fußraums 12 an der Spritzwand 10 festgeschweißt ist, während ihr freies oberes Ende 32 gegen die vom Fahrgastraum 8 abgewandte Rückseite 34 der Fußablage 14 anliegt.

Die Stütze 26 ist etwa vertikal ausgerichtet und berührt die Fußablage 14 im oberen Drittel von deren Längserstreckung. Die Abmessungen der Stütze 26 und die Stellen, an denen die Fußablage 14 und die Stütze 26 an der Spritzwand 10 befestigt sind, sind so gewählt, daß die im Bereich der Gelenkverbindung 24 an der Spritzwand 10 aufgehängte Fußablage 14 infolge der Abstützung durch die Stütze 26 schräg nach unten und hinten weist, wobei ihre dem Fahrgastraum 8 zugewandte schräge Fußauflagefläche 36 mit einer zur Fahrbahnebene parallelen Ebene E einen im Allgemeinen als Fußablagewinkel α bezeichneten spitzen Winkel einschließt. Um bei den Fahrzeuginsassen während der Fahrt für eine entspannte Fußhaltung zu sorgen, liegt dieser Fußablagewinkel α vorzugsweise zwischen 55 und 60 Grad.

Das untere Ende der Fußablage 14 weist zweckmäßig einen gewissen Abstand vom Boden 30 des Fußraums 12 auf, so daß es sich bei einer unfallbedingten Verformung der Spritzwand 10 nicht zwischen dieser und dem Boden 30 verkeilen kann.

Die Gelenkverbindung 24 zwischen der Fußablage 14 und der Spritzwand 10 wird von einem Schwenklager gebildet, dessen Schwenkachse 38 im wesentlichen horizontal und quer zur Fahrtrichtung verläuft.

Zur Gewichts- und Kosteneinsparung könnte die Gelenkverbindung 24 alternativ jedoch auch als "Filmscharnier" ausgebildet sein, zum Beispiel in Form eines schmalen Streifens aus einem reißfesten biegsamen Material, wie beispielsweise einem Aramidgewebe, dessen oberer Längsseitenrand an der Spritzwand 10 befestigt ist, während sein unterer Längsseitenrand am oberen Rand 22 der Fußablage 14 befestigt ist.

Der gegen die ebene Rückseite 34 der Fußablage 14 anliegende obere Rand 22 der Stütze 26 ist gerundet, so daß er sich bei einer Verformung der Spritzwand 10 leicht gegenüber der Rückseite 34 der Fußablage 14 verschieben kann.

Die Fußablage 14 und die Stütze 26 werden jeweils zweckmäßig von biegesteifen Blechtafeln gebildet, deren Steifigkeit größer als die Steifigkeit der Spritzwand 10 ist, so daß sie sich bei einer unfallbedingten Deformation der Spritzwand 10 nicht mitverformen. Alternativ kann insbesondere die Fußablage 14 zum Beispiel auch durch Formen aus einem faserverstärkten Kunststoff hergestellt werden, mit den Vorteilen einer hohen Biegesteifigkeit in seiner Längsrichtung und eines verhältnismäßig geringen Gewichts.

Wie am besten in Fig. 3 dargestellt, ist bei einem schweren Frontal- oder Offset-Crash des Pkw das Ausmaß der Intrusion der Spritzwand 10, d.h. der horizontale Abstand zwischen demselben Punkt auf der unverformten bzw. der verformten Spritzwand 10, entlang der Spritzwand 10 im Allgemeinen nicht gleich. Während die Spritzwand 10 in der Nähe des Bodens 30 wegen der großen Steifigkeit der Bodenwanne durch die Verformung nur in einem verhältnismäßig geringen Ausmaß nach hinten in den Fußraum bewegt wird, ist das Ausmaß dieser Bewegung weiter oben größer, wobei es im Bereich oberhalb der Gelenkverbindung 24 zwischen der Fußablage 14 und der Spritzwand 10 am größten ist.

In Fig. 3 ist der Verlauf der Spritzwand 10 unmittelbar vor dem Aufprall sowie 80 ms später in verformtem Zustand jeweils zusammen mit der Fußablage 14 und der Stütze 26 in durchgezogenen Linien dargestellt, während ihr Verlauf nach 35 ms bzw. 55 ms in unterbrochenen Linien angedeutet ist. Wie man sieht, kommt es beim Aufprall oberhalb des Bodens 30 zu einer Ausbauchung der Spritzwand 10 entgegen der Fahrtrichtung nach hinten in den Fußraum 12, wobei sich das untere Ende der Stütze 26 parallel zur Fahrbahnebene E weniger weit nach hinten bewegt als die Gelenkverbindung 24 am oberen Ende der Fußablage 14. Diese Ausbauchung der Spritzwand 10 führt somit im Bereich der Stützenbefestigung zu einer Veränderung des Neigungswinkels der Spritzwand 10 und damit auch zu einer Veränderung des Neigungswinkels der Stütze 26 selbst, die nach dem Aufprall schräg nach hinten und oben weist.

Durch die Schrägstellung der Stütze 26 wird die auf ihrem oberen Ende 32 aufliegende Fußablage 14 im Wesentliche parallel zu ihrer anfänglichen Ausrichtung nach hinten in den Fußraum 12 verschoben, wobei ein spitzer Winkel zwischen der Spritzwand 10 und der Rückseite 34 der Fußablage 14 größer wird.

Eine Fußablage 14 ohne die erfindungsgemäße Stütze 26 würde im Gegensatz dazu die in Fig. 3 rechts in strichpunktierten Linien angezeigte Stellung mit einem Fußablagewinkel α' von etwa 80 Grad einnehmen, was eine starke Dorsiflexion eines auf der Fußablage ruhenden Fußes zur Folge hätte.

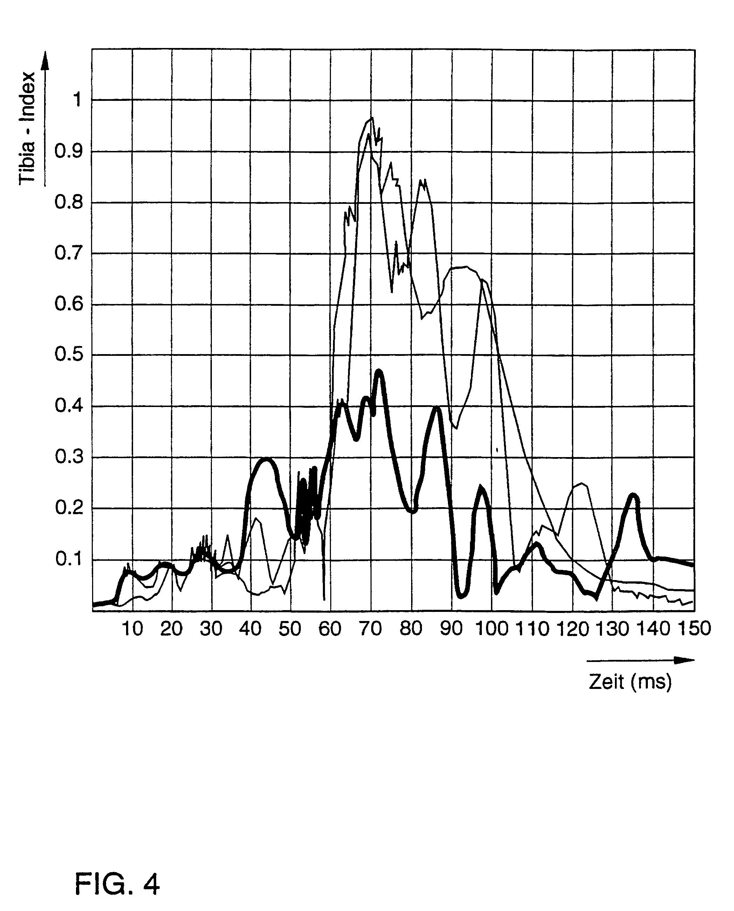

Fig. 4 zeigt in dünnen Linien den Verlauf des sogenannten Tibia-Index bei einer herkömmlichen Fußablage entsprechend Fig. 2 über die Zeit des Aufpralls, wobei eine der beiden dünn gezeichneten Kurven den bei einem Versuch gemessenen Tibia-Index und die andere der beiden dünn gezeichneten Linien denselben Tibia-Index entsprechend einem zur Simulation von Unfallfolgen entwickelten Simulationsmodell wiedergibt. Wie man aus einem Vergleich der beiden Kurven sieht, gibt es eine hohe Übereinstimmung zwischen den Versuchsergebnissen einerseits und den Ergebnissen des Simulationsmodells andererseits und damit eine gute Übereinstimmung zwischen den Ergebnissen des Simulationsmodells und der Wirklichkeit.

Fig. 4 zeigt in einer dicken Linie den Verlauf des Tibia-Index bei einer erfindungsgemäßen Fußablage entsprechend Fig. 1 und 3, wobei ersichtlich ist, daß der Tibia-Index insbesondere im mittleren Teil der Kurve erheblich unter den Werten bei der herkömmlichen Fußablage bleibt.

Der hier angegebene Tibia-Index entspricht demjenigen aus der Richtlinie 96/79/EG des Europäischen Parlaments und des Rates vom 16. Dezember 1996 (Amtsblatt der Europäischen Gemeinschaften vom 21.1.97, Nr. L 18/7ff, wobei sich die Grundlage für die Berechnung des Tibia-Index auf Nr. L18/24 findet.

## Patentansprüche

1. Sicherheitseinrichtung für ein Kraftfahrzeug, umfassend eine in einem vorderen Fußraum (12) des Kraftfahrzeugs angebrachte Fußablage (14), die im Bereich ihres oberen Randes (22) gelenkig mit einer vorderen Begrenzungswand (10) des Fußraums (12) verbunden ist, um einen im Normalbetrieb vorhandenen Fußablagewinkel (α) zwischen einer dem Fahrgastraum (8) des Kraftfahrzeugs zugewandten schrägen Auflagefläche (36) der Fußablage (14) und einer zur Fahrbahnebene (E) parallelen Ebene bei einer unfallbedingten Intrusion der Begrenzungswand (10) in den Fußraum (12) zu bewahren oder zu verkleinern, **gekennzeichnet durch** eine auf die Fußablage (14) einwirkende biegesteife Stütze (26), die ein starr mit der Begrenzungswand (10) verbundenes unteres Ende (28) und ein unterhalb der Gelenkverbindung (24) auf die Fußablage (14) einwirkendes oberes Ende (32) aufweist.

2. Sicherheitseinrichtung nach Anspruch 1, **dadurch gekennzeichnet, daß** das untere Ende (28) der Stütze (26) in der Nähe eines Bodens (30) des Fußraums (12) an der Begrenzungswand (10) befestigt ist.

3. Sicherheitseinrichtung nach Anspruch 1 oder 2, **dadurch gekennzeichnet, daß** das untere Ende (28) der Stütze (26) an der Begrenzungswand (10) festgeschweißt ist.

4. Sicherheitseinrichtung nach einem der Ansprüche 1 bis 3, **dadurch gekennzeichnet, daß** die Stütze (26) steil nach oben weist.

5. Sicherheitseinrichtung nach einem der Ansprüche 1 bis 3, **dadurch gekennzeichnet, daß** die Stütze (26) im wesentlichen senkrecht ausgerichtet ist.

6. Sicherheitseinrichtung nach einem der Ansprüche 1 bis 5, **dadurch gekennzeichnet, daß** das obere Ende (32) der Stütze (26) verschiebbar gegen eine Rückseite (34) der Fußablage (14) anliegt.

7. Sicherheitseinrichtung nach einem der Ansprüche 1 bis 6, **dadurch gekennzeichnet, daß** das obere Ende (32) der Stütze (26) gerundet ist.

8. Sicherheitseinrichtung nach einem der Ansprüche 1 bis 7, **dadurch gekennzeichnet, daß** das obere Ende der Stütze in einem Gleitlager auf der Rückseite der Fußablage gelagert ist.

9. Sicherheitseinrichtung nach einem der Ansprüche 1 bis 8, **dadurch gekennzeichnet, daß** die Fußablage (14) auf der Stütze (26) aufliegt.

10. Sicherheitseinrichtung nach Anspruch 9, **dadurch gekennzeichnet, daß** die Fußablage (14) im Bereich ihrer oberen Hälfte auf der Stütze (26) aufliegt

11. Sicherheitseinrichtung nach einem der Ansprüche 1 bis 10, **dadurch gekennzeichnet, daß** ein unteres Ende (22) der Fußablage (14) in einem geringen Abstand von einem Boden (30) des Fußraums (12) endet.

12. Sicherheitseinrichtung nach einem der Ansprüche 1 bis 11, **dadurch gekennzeichnet, daß** sich die Stütze (12) mindestens über die halbe Breite der Fußablage (14) erstreckt.

13. Sicherheitseinrichtung nach einem der Ansprüche 1 bis 12, **dadurch gekennzeichnet, daß** die Fußablage (14) um eine im wesentlichen quer zur Fahrtrichtung verlaufende horizontale Achse schwenkbar an der Begrenzungswand (10) befestigt ist.

14. Sicherheitseinrichtung nach einem der Ansprüche 1 bis 13, **dadurch gekennzeichnet, daß** die Fußablage (14) und die Stütze (26) eine größere Biegesteifigkeit als die Begrenzungswand (10) aufweisen.

15. Sicherheitseinrichtung nach einem der Ansprüche 1 bis 14, **dadurch gekennzeichnet, daß** die Begrenzungswand (10) von einer in Fahrtrichtung vor dem Fußraum (12) angeordneten Spritzwand und/oder Radhauswand gebildet wird.

16. Kraftfahrzeug mit einer Sicherheitseinrichtung nach einem der vorangehenden Ansprüche.

## Claims

1. Safety device for a motor vehicle, comprising a footrest (14) which is mounted in a front footwell (12) of the motor vehicle and is connected in the region of its upper edge (22) in an articulated manner to a front boundary wall (10) of the footwell (12) in order, if the boundary wall (10) intrudes into the footwell (12) due to an accident, to maintain or to reduce a footrest angle (α) which is present in normal operation between an oblique supporting surface (36) of the footrest (14), which surface faces the passenger compartment (8) of the motor vehicle, and a plane which is parallel to the carriageway plane (E), **characterized by** a flexurally rigid support (26) which acts upon the footrest (14), has a lower end (28) connected rigidly to the boundary wall (10) and an upper end (32) which acts upon the footrest (14) below the articulated connection (24).

2. Safety device according to Claim 1, **characterized in that** the lower end (28) of the support (26) is fastened to the boundary wall (10) in the vicinity of a floor (30) of the footwell (12).

3. Safety device according to Claim 1 or 2, **characterized in that** the lower end (28) of the support (26) is securely welded to the boundary wall (10) .

4. Safety device according to one of Claims 1 to 3, **characterized in that** the support (26) points steeply upwards.

5. Safety device according to one of Claims 1 to 3, **characterized in that** the support (26) is orientated essentially vertically.

6. Safety device according to one of Claims 1 to 5, **characterized in that** the upper end (32) of the support (26) bears displaceably against a rear side (34) of the footrest (14).

7. Safety device according to one of Claims 1 to 6, **characterized in that** the upper end (32) of the support (26) is rounded.

8. Safety device according to one of Claims 1 to 7, **characterized in that** the upper end of the support is mounted in a sliding bearing on the rear side of the footrest.

9. Safety device according to one of Claims 1 to 8, **characterized in that** the footrest (14) rests on the support (26) .

10. Safety device according to Claim 9, **characterized in that** the footrest (14) rests in the region of its upper half on the support (26).

11. Safety device according to one of Claims 1 to 10, **characterized in that** a lower end (22) of the footrest (14) ends at a small distance from a floor (30) of the footwell (12) .

12. Safety device according to one of Claims 1 to 11, **characterized in that** the support (12) extends at least over half the width of the footrest (14).

13. Safety device according to one of Claims 1 to 12, **characterized in that** the footrest (14) is fastened to the boundary wall (10) in a manner such that it can pivot about a horizontal axis running essentially transversely to the direction of travel.

14. Safety device according to one of Claims 1 to 13, **characterized in that** the footrest (14) and the support (26) have greater flexural rigidity than the boundary wall (10).

15. Safety device according to one of Claims 1 to 14, **characterized in that** the boundary wall (10) is formed by a splash wall and/or wheel house wall arranged in front of the footwell (12) in the direction of travel.

16. Motor vehicle having a safety device according to one of the preceding claims.

## Revendications

1. Dispositif de sécurité pour un véhicule automobile, comprenant un appuie-pieds (14) monté dans un espace avant pour les pieds (12) du véhicule automobile, qui est raccordé de manière articulée dans la région de son bord supérieur (22) à une paroi de limitation avant (10) de l'espace pour les pieds (12), afin de conserver ou de réduire un angle d'appuie-pieds (α) existant lors du fonctionnement normal entre une surface d'appui (36) oblique de l'appuie-pieds (14) tournée vers l'habitacle (8) du véhicule et un plan parallèle au plan de la trajectoire de conduite (E) dans le cas d'une intrusion, provoquée par un accident, de la paroi de limitation (10) dans l'espace pour les pieds (12), **caractérisé par** un support (26) rigide en flexion agissant sur l'appuie-pieds (14), qui présente une extrémité inférieure (28) raccordée rigidement à la paroi de limitation (10) et une extrémité supérieure (32) agissant en dessous de la connexion articulée (24) sur l'appuie-pieds (14).

2. Dispositif de sécurité selon la revendication 1, **caractérisé en ce que** l'extrémité inférieure (28) du support (26) est fixée à proximité d'un sol (30) de l'espace pour les pieds (12) à la paroi de limitation (10).

3. Dispositif de sécurité selon la revendication 1 ou 2, **caractérisé en ce que** l'extrémité inférieure (28) du support (26) est soudée fixement à la paroi de limitation (10).

4. Dispositif de sécurité selon l'une quelconque des revendications 1 à 3, **caractérisé en ce que** le support (26) est fortement incliné vers le haut.

5. Dispositif de sécurité selon l'une quelconque des revendications 1 à 3, **caractérisé en ce que** le support (26) est orienté essentiellement verticalement.

6. Dispositif de sécurité selon l'une quelconque des revendications 1 à 5, **caractérisé en ce que** l'extrémité supérieure (32) du support (26) s'applique de manière déplaçable contre un côté arrière (34) de l'appuie-pieds (14).

7. Dispositif de sécurité selon l'une quelconque des revendications 1 à 6, **caractérisé en ce que** l'extrémité supérieure (32) du support (26) est arrondie.

8. Dispositif de sécurité selon l'une quelconque des revendications 1 à 7, **caractérisé en ce que** l'extrémité supérieure du support est montée dans un palier lisse sur le côté arrière de l'appuie-pieds.

9. Dispositif de sécurité selon l'une quelconque des revendications 1 à 8, **caractérisé en ce que** l'appuie-pieds (14) repose sur le support (26).

10. Dispositif de sécurité selon la revendication 9, **caractérisé en ce que** l'appuie-pieds (14) repose dans la région de sa moitié supérieure sur le support (26).

11. Dispositif de sécurité selon l'une quelconque des revendications 1 à 10, **caractérisé en ce qu'**une extrémité inférieure (22) de l'appuie-pieds (14) se termine à une faible distance d'un sol (30) de l'espace pour les pieds (12).

12. Dispositif de sécurité selon l'une quelconque des revendications 1 à 11, **caractérisé en ce que** le support (26) s'étend au moins sur la moitié de la largeur de l'appuie-pieds (14).

13. Dispositif de sécurité selon l'une quelconque des revendications 1 à 12, **caractérisé en ce que** l'appuie-pieds (14) est fixé à la paroi de limitation (10) de manière à pouvoir pivoter autour d'un axe horizontal s'étendant essentiellement transversalement à la direction de conduite.

14. Dispositif de sécurité selon l'une quelconque des revendications 1 à 13, **caractérisé en ce que** l'appuie-pieds (14) et le support (26) présentent une plus grande rigidité en flexion que la paroi de limitation (10).

15. Dispositif de sécurité selon l'une quelconque des revendications 1 à 14, **caractérisé en ce que** la paroi de limitation (10) est formée par un tablier d'auvent et/ou une paroi de passage de roue disposés devant l'espace pour les pieds (12) dans la direction de conduite.

16. Véhicule automobile comprenant un dispositif de sécurité selon l'une quelconque des revendications précédentes.
